# FASCICULE DE BREVET EUROPEEN

(11) **EP 0 906 535 B1**
(45) Date de publication et mention de la délivrance du brevet: **31.01.2001**
(21) Numéro de dépôt: 97929369.3
(22) Date de dépôt: 17.06.1997
(51) Int. Cl.: F16L 37/26

(54) **DISPOSITIF DE RACCORDEMENT**
VERBINDUNGSVORRICHTUNG
CONNECTION MEANS

(30) Priorité: 18.06.1996 FR 9607530
(43) Date de publication de la demande: 07.04.1999
(73) Titulaire: MMC, 85300 Froidfond (FR)
(72) Inventeur: CHARRIAU, Joseph, F-44270 Saint Etienne de Mer Morte (FR)
(74) Mandataire: Dawidowicz, Armand
(86) Numéro de dépôt international: FR9701092
(87) Numéro de publication internationale: WO9748939

(56) Documents cités:
- GB-A- 278 677
- GB-A- 861 531
- GB-A- 1 009 992
- US-A- 1 579 149
- US-A- 4 103 712

## Description

La présente invention concerne un dispositif de raccordement entre un conduit relié à une unité collectrice et/ou de distribution de fluide et un conduit de transfert.

Un tel dispositif de raccordement trouve de nombreuses applications notamment dans le domaine agro-alimentaire. Ainsi, il peut constituer un dispositif de raccordement entre une vanne de cuve stationnaire servant au stockage d'un liquide, tel que du lait ou du vin, et un conduit de transfert d'une unité mobile collectrice de liquide telle qu'un camion citerne. Dans le domaine de la sécurité, il peut être utilisé par les pompiers pour le raccordement de lances ou de conduits, soit à des bornes à incendie, soit à la citerne du camion de pompiers, etc. Il peut encore être utilisé lors du transfert d'autres fluides, tels que des combustibles liquides, etc.

En tant que raccord rapide, les applications d'un tel dispositif sont nombreuses.

Différents raccords rapides ont été développés à ce jour. Les qualités principales exigées pour de tels raccords, en particulier dans le domaine alimentaire, sont leur rapidité de mise en oeuvre, leur ergonomie et leur sécurité limitant le nombre de manipulations de l'utilisateur et facilitant ses conditions de travail, leur qualité hygiénique supprimant tout risque de pollution du produit à transférer, leur configuration éliminant toute perte de charges par "passage direct" du fluide et leur éventuel nettoyage automatique.

Les raccords développés à ce jour présentent déjà un certain nombre de ces qualités. Tel est le cas du dispositif rapide d'assemblage décrit dans le brevet FR-A- 2.679.314. Ce dispositif rapide d'assemblage étanche est constitué de deux éléments de canalisation mâle, respectivement femelle, dont l'un est solidaire d'une installation fixe. L'un des éléments comporte, coaxialement sur son raccord, un manchon coulissant actionné par des moyens du type à genouillère entre une position d'assemblage étanche des deux éléments et une position d'ouverture. Le manchon est pourvu d'un prolongement en forme de U rendu solidaire du manchon par des flancs latéraux et permettant, dans la position d'ouverture, la présentation du deuxième élément dans l'alignement du premier. L'intérêt d'un tel dispositif est de permettre un maintien en présentation de l'un des éléments de raccord sur l'autre élément de raccord avant son serrage sur ledit autre élément de raccord.

Toutefois, un tel dispositif, bien que facilitant la mise en oeuvre de l'assemblage, reste complexe. D'une part il nécessite un dispositif d'actionnement, tel qu'un système à genouillère ou un vérin, pour déplacer à coulissement ledit manchon, d'autre part, il nécessite que les deux éléments de canalisation soient respectivement l'un mâle, l'autre femelle, pour assurer un auto-centrage du raccord mobile lors de l'opération d'assemblage. En conséquence, même si un tel système facilite les conditions de travail de l'utilisateur, il reste relativement complexe et cher à fabriquer. Il met en oeuvre un grand nombre de pièces mobiles qui risquent de se coincer, de se casser, etc. nécessitant une maintenance importante d'un tel système. Enfin, la plupart des éléments du raccord sont disposés sur l'élément fixe du raccord. Or, par exemple dans l'application laitière, un seul raccord mobile est nécessaire pour plusieurs raccords fixes. Il convient donc, dans certaines applications, pour limiter le coût d'une installation, de mettre au point des raccords dans lesquels le raccord mobile est le plus complexe des deux éléments du raccord.

Un autre dispositif de raccordement est également décrit dans le brevet WO-A-95.02149. Ce dispositif comporte notamment un bloc de raccordement assemblé sur des éléments à raccorder grâce à l'engagement de glissières du type à queue d'aronde et de rails complémentaires. Les rails sont linéaires et ne permettent pas un verrouillage de l'ensemble en vue d'assurer une étanchéité. Le verrouillage est donc assuré par une pièce rapportée telle qu'une cale de liaison ou des éléments de blocage dont la forme autorise une mise en pression du joint d'étanchéité. En conséquence, un tel dispositif oblige, du fait de la présence du bloc de raccordement, à rallonger le circuit. En outre, il nécessite de rapporter des éléments supplémentaires indépendants du raccord pour assurer l'étanchéité.

D'autres documents tels que WO-A-91.11645, EP-A-47351 ou US-A-4.070.045 permettent un assemblage de deux éléments de raccord au moyen d'un rail destiné à s'engager à l'intérieur d'une rainure ménagée sur l'autre élément du raccord. Toutefois, de tels dispositifs, en raison de leur ergonomie, ne sont pas adaptés pour des opérations répétées de montage et de démontage. En outre, l'élément de raccord mobile est parfois lourd, car déjà rempli de fluide, et il ne peut donc pas être manipulé de manière aisée. Il importe donc que l'assemblage ne nécessite pas une grande habileté et une grande précision pour pouvoir être réalisé. Tel n'est pas le cas dans un dispositif de raccordement glissière/rail où l'introduction du rail dans la glissière s'effectue radialement audit conduit à raccorder.

Un autre dispositif de raccordement entre un conduit de transfert et un conduit relié à une unité collectrice et/ou de distribution de fluide est décrit dans le brevet GB-A- 1.009.992. L'inconvénient majeur du dispositif décrit est l'absence de repérage de la position du conduit de transfert lors de son raccordement au conduit relié à une unité collectrice et/ou de distribution de fluide. Il en résulte une perte de temps pour l'opérateur qui doit effectuer cette opération. En outre, il existe des risques importants de desserrage intempestif du dispositif de raccordement au cours de l'opération de transfert du fait que la pièce terminale du conduit de transfert et le conduit de transfert sont montés solidaires en déplacement.

Un autre dispositif de raccordement est encore décrit dans le brevet GB-A-278.677. Ce dispositif de raccordement est constitué de deux organes d'accouplement creux qui sont déplaçables angulairement pour venir s'engager en position verrouillée en alignement axial, ces organes d'accouplement coopérant avec un organe élastique disposé entre lesdits organes d'accouplement. Cet organe élastique est par exemple constitué par un joint. Cet organe élastique assure un assemblage étanche et verrouillé en translation des organes d'accouplement du raccord tout en assurant un déplacement angulaire en rotation de l'un des organes d'accouplement du raccord par rapport à l'autre organe d'accouplement. Ce dispositif de raccordement présente l'inconvénient majeur de nécessiter pour son fonctionnement la compression d'un organe élastiquement déformable. Il en résulte une usure rapide de l'ensemble du dispositif de raccordement.

Un premier but de l'invention est de proposer un dispositif de raccordement dont la partie mobile du raccord peut être aisément manipulée, cette partie mobile du raccord s'autopositionnant avant serrage sur l'élément de raccord fixe de telle sorte que le geste de l'utilisateur ne nécessite ni réflexion ou adresse, ni effort physique, le passage du dispositif de la position desserrée à la position serrée et inversement s'effectuant avec une seule main en un mouvement continu.

Un autre but de la présente invention est de proposer un dispositif de raccordement dans lequel les moyens de serrage sont partie intégrante des éléments de raccord, excluant ainsi tout dispositif de verrouillage supplémentaire, tel que clé ou similaire.

Un autre but de la présente invention est encore de proposer un dispositif de raccordement dans lequel les moyens de serrage sont extrêmement simples dans leur conception et rendent ainsi l'intégralité du raccord facile à nettoyer, ces moyens de serrage pouvant éventuellement permettre le serrage desdits éléments du raccord suivant deux sens de fonctionnement.

A cet effet, l'invention a pour objet un dispositif de raccordement entre un conduit relié à une unité collectrice et/ou de distribution de fluide et un conduit de transfert, caractérisé en ce que le conduit de transfert est équipé, à son extrémité de raccordement avec le conduit de l'unité collectrice et/ou de distribution, d'un embout comportant d'une part au moins une poignée de port, de préférence radiale audit embout, et solidaire de ce dernier et, d'autre part, une platine présentant une face, de préférence dressée, destinée à venir s'appliquer à pression contre une platine de l'embouchure du conduit de l'unité collectrice et/ou de distribution, l'embout étant monté libre à rotation par rapport au conduit de transfert pour permettre, dans la position de port, la mise en contact des deux platines de l'ensemble conduit d'unité collectrice/embout, puis, par rotation de l'embout par l'intermédiaire de la poignée, l'application à serrage desdites platines du dispositif de raccordement.

Selon une forme de réalisation préférée de l'invention, l'embout et le conduit de l'unité collectrice et/ou de distribution comportent respectivement, l'un sur sa platine d'application à l'opposé de la face d'application de ladite platine, un profil de came évolutif formé par une portée de serrage, l'autre au moins un chemin de guidage porté par son embouchure, la portée de serrage étant destinée à être introduite dans le chemin de guidage de manière telle que, lors de la rotation de l'embout à l'aide de la poignée, la portée de serrage prenne appui à l'intérieur du ou des chemins de guidage et, par réaction, provoque l'application à serrage des platines du dispositif.

L'invention sera bien comprise à la lecture de la description suivante d'exemples de réalisation, en référence aux dessins annexés dans lesquels :
la figure 1 représente une vue schématique partielle de principe d'un dispositif de raccordement conforme à l'invention ;
la figure 2 représente une vue en perspective éclatée d'un mode de réalisation préféré du dispositif de raccordement objet de l'invention ;
la figure 3 représente une variante de l'embout représenté à la figure 2 ;
la figure 4 représente une variante des chemins de guidage et de la platine représentés à la figure 2 et
la figure 5 représente le dispositif de la figure 2 en position assemblée non serrée.

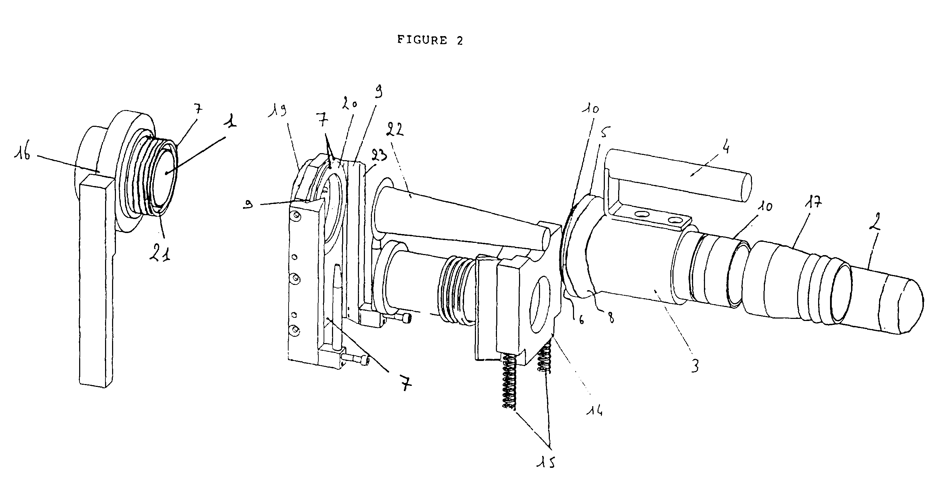

Le dispositif de raccordement, objet de l'invention, permet le raccordement entre un conduit 1 relié à une unité collectrice et/ou de distribution de fluide généralement fixe et un conduit de transfert 2 généralement mobile. Ainsi, ce dispositif de raccordement peut être installé entre une vanne de cuve stationnaire servant au stockage d'un liquide, tel que du lait, et un conduit de transfert d'une unité mobile collectrice de liquide du type camion-citerne. Un exemple de montage de ce dispositif de raccordement entre une vanne 16 et un conduit de transfert 2 est représenté à la figure 2.

Le conduit de transfert 2 est équipé, à son extrémité de raccordement avec le conduit 1 de l'unité collectrice et/ou de distribution, d'un embout 3 comportant d'une part au moins une poignée 4 de port solidaire dudit embout 3 et, d'autre part, une platine 5 destinée à venir s'appliquer à pression contre une platine 7 de l'embouchure du conduit 1 de l'unité collectrice et/ou de distribution. Dans les exemples représentés, l'embout 3 comporte une poignée 4 de port disposée radialement audit embout 3, cette disposition semblant la plus appropriée dans le domaine laitier. La platine 5 présente quant à elle une face 6 de préférence dressée destinée à venir s'appliquer à pression contre une platine 7 de l'embouchure du conduit 1.

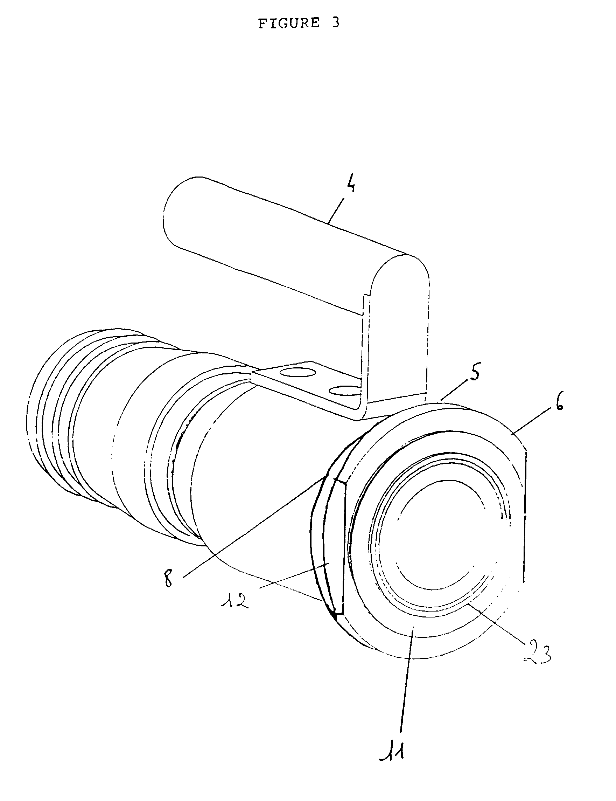

L'embout 3 est monté libre à rotation par rapport au conduit de transfert 2 pour permettre, dans la position de port, correspondant à une position représentée par exemple à la figure 3, la mise en regard des deux platines 5, 7 de l'ensemble conduit 1 d'unité collectrice/embout 3, puis, par rotation de l'embout 3 par l'intermédiaire de la poignée 4, l'application à serrage desdites platines 5, 7 du dispositif de raccordement. Une fois les platines ainsi appliquées l'une contre l'autre, l'étanchéité du dispositif de raccordement est obtenue. Le fluide peut alors librement circuler dans ce raccord.

La liaison entre le conduit de transfert 2 et l'embout 3 peut affecter un grand nombre de formes en fonction du mode de réalisation de l'embout 3. Ainsi, dans l'exemple de réalisation représenté à la figure 2, ce conduit de transfert 2 est emmanché sur un embout cannelé 17 qui est lui-même monté solidaire d'un manchon 10 traversant l'embout 3. Ce manchon 10 sera décrit ci-après. Ce conduit de transfert 2 est généralement équipé d'une vanne (non représentée) qui permet, lorsque ce conduit de transfert 2 est relié à un camion-citerne, d'empêcher un écoulement libre dudit fluide. Comme cette vanne est généralement située juste en amont de l'embout 3, le conduit de transfert 2 est toujours rempli de liquide. Il est donc lourd et difficile à manipuler.

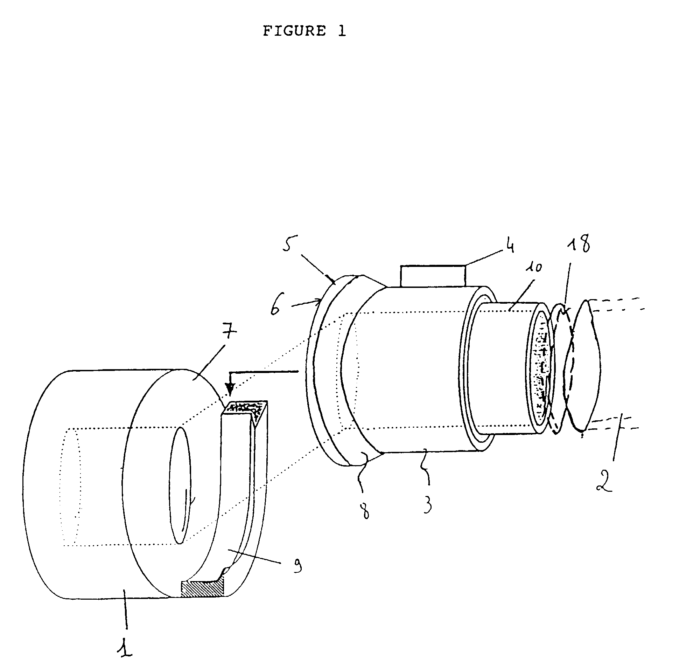

L'embout 3 peut également affecter un grand nombre de formes. Dans un premier exemple de réalisation, tel que représenté à la figure 1, l'embout 3 est réalisé monobloc et est raccordé au conduit de transfert 2 par l'intermédiaire d'un raccord tournant 18 (représenté de manière très schématique à la figure 1) disposé en amont de la poignée de port 4. Dans un autre mode de réalisation représenté à la figure 2, l'embout 3 est traversé par un manchon 10 comportant à une extrémité une collerette 11 destinée à prendre appui sur la platine 7 de l'embouchure du conduit de l'unité collectrice et/ou de distribution, l'autre extrémité étant solidaire du conduit de transfert 2, l'embout 3 portant la poignée 4 pouvant être déplacé angulairement par rapport au manchon 10 stationnaire. Dans ce cas, la poignée 4 et l'embout 3 comportent par exemple au moins deux perçages traversants disposés en regard, aptes à recevoir des vis qui viennent se loger dans des gorges circonférentielles externes ménagées sur ledit manchon 10. Ainsi, la poignée 4 est solidaire de l'embout 3 mais l'ensemble poignée 4/embout 3 peut librement se déplacer angulairement autour du manchon 10. C'est grâce à cette caractéristique de l'ensemble embout 3/poignée 4 monté libre à rotation autour du conduit de transfert 2 que l'embout 3 est toujours automatiquement positionné correctement sur l'embouchure du conduit 1 de telle sorte que les moyens de serrage, dont une partie est portée par l'embout 3 et qui seront décrits ci-après, peuvent être mis en oeuvre immédiatement. En effet, la poignée 4 confère à l'embout 3 une orientation, cette orientation étant essentielle pour permettre le positionnement de l'embout 3 en regard du conduit 1. En effet, une mauvaise orientation de l'embout 3 pourrait par exemple empêcher la platine 5 de l'embout 3 de se positionner correctement et empêcherait par suite toute application à serrage de la face 6 de cette platine 5 contre la platine 7 du conduit 1.

De même, ce montage permet un auto-positionnement par gravité du conduit de transfert 2 sans que ce dernier n'interfère sur les mouvements de l'embout 3. Ainsi, grâce à ce montage de l'embout 3, ce dernier peut être déplacé angulairement pour assurer le serrage des platines l'une contre l'autre par déplacement de la platine 5 sans que des forces de réaction en translation en direction de la platine 7 du conduit du transfert 2 ne lui soient transmises et sans que le conduit de transfert occupe une position qui risquerait d'endommager rapidement ce conduit 2. En outre, en raison de la rigidité du conduit de transfert 2, une torsion de ce conduit doit être exclue car elle exigerait un effort trop important de l'utilisateur. Au contraire, la contre-réaction exercée par ce conduit soumis à une torsion sur l'embout 3 risquerait de déverrouiller le dispositif de manière intempestive. En conséquence, du fait de ce montage libre à rotation de l'embout 3 sur le conduit de transfert 2, les déplacements de l'embout 3 sont indépendants de ceux du conduit de transfert, ces deux éléments pouvant ainsi être automatiquement positionnés sans aucun effort physique.

Dans le cas où l'embout 3 est traversé par un manchon 10 stationnaire, ce manchon 10 peut comporter, sur la face de sa collerette 11 destinée à venir en appui sur la platine 7 de l'embouchure du conduit 1 de l'unité collectrice et/ou de distribution, une saillie annulaire 23 représentée à la figure 3 qui coopère avec un joint torique disposé sur la platine 7 de l'embouchure du conduit 1 de l'unité collectrice et/ou de distribution, tel que cela sera décrit ci-après dans le cadre de la description de l'opération de serrage.

La platine 5 d'application de l'embout 3 comporte en outre, à l'opposé de sa face 6 dressée, un profil de came évolutif formé par une portée de serrage destiné à être introduite dans au moins un chemin de guidage 9 porté par l'embouchure du conduit 1 de l'unité collectrice et/ou de distribution de manière telle que, lors de la rotation de l'embout 3 à l'aide de la poignée 4, la portée de serrage prenne appui à l'intérieur du ou des chemins de guidage et, par réaction, provoque l'application à serrage des platines 5, 7 du dispositif. Dans les exemples représentés, la platine 5 d'application de l'embout 3 comporte un profil de came formé par une portée 8 conique de serrage évoluant suivant une ellipse. Le chemin de guidage est quant à lui réalisé au moyen de deux glissières 9 parallèles portées par l'embouchure du conduit 1 de l'unité collectrice et/ou de distribution. Dans l'exemple représenté à la figure 1, ce chemin de guidage est constitué par un rail courbe s'étendant sur une portion de la circonférence de ladite platine 7 du conduit 1. Le profil en section transversale de ce rail peut affecter un grand nombre de formes. Dans l'exemple représenté, il affecte sensiblement une forme en queue d'aronde à profil elliptique en raison du profil de came formé par la portée 8 conique de serrage. Il est bien évident que le profil du chemin de guidage 9 et le profil de came évolutif formé par la portée de serrage dudit embout 3 peuvent affecter un grand nombre d'autres formes à la portée de l'homme du métier. Toutefois, l'intérêt de la forme retenue décrite ici est sa facilité de nettoyage car les formes ainsi réalisées ne ménagent aucun angle qui serait difficilement accessible lors du nettoyage. De même, il est à la portée de tout homme du métier d'imaginer que la portée 8 de serrage et le chemin de guidage 9 peuvent être inversés, à savoir que ce chemin de guidage 9 peut être ménagé à l'extrémité de l'embout 3 tandis que le profil de came évolutif formé par la portée de serrage peut être disposé sur la face de la platine 7 de l'embout opposée à sa face d'application. Le chemin de guidage sera toujours, dans une installation, positionné sur l'élément de raccord devant être installé en grand nombre en raison de son faible coût. Il est à noter également que d'autres moyens de serrage plus classiques, tels que vissage ou autre, peuvent également être utilisés, l'embout 3 comportant par exemple un filetage apte à coopérer avec un taraudage ménagé dans un chemin de guidage porté par le conduit 1.

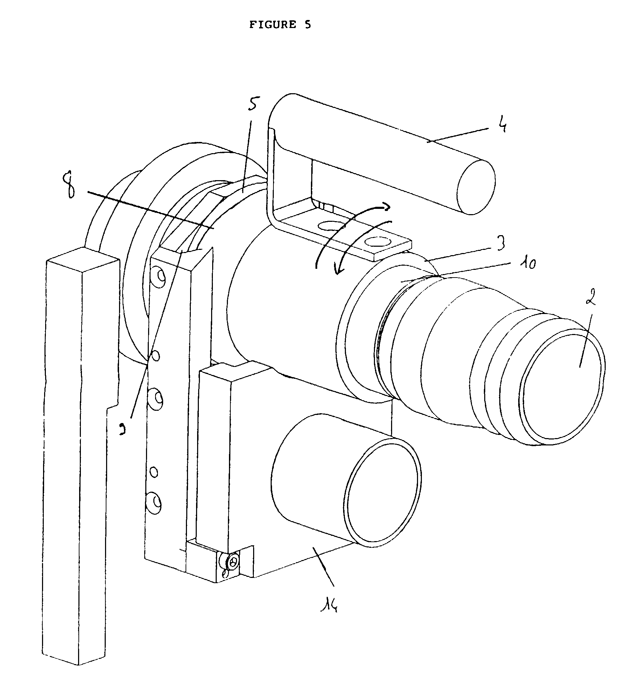

Dans le premier mode de réalisation, tel que représenté à la figure 1, lorsque l'utilisateur amène les platines 5 et 7 en regard et au moins partiellement en contact, il introduit la portée 8 conique de serrage de l'embout 3 à l'intérieur du chemin de guidage 9, cette portée 8 conique prenant appui à l'intérieur dudit chemin de guidage 9. Dans cette position, l'alignement de l'embouchure du conduit 1 de l'unité collectrice et/ou de distribution avec le conduit de transfert 2 est normalement déjà réalisé. Dans cette position également, l'utilisateur peut être certain que les moyens de serrage, à savoir la portée conique 8 de serrage, sont correctement positionnés par rapport au chemin de guidage 9. En effet, la poignée 4 permettant de porter naturellement l'embout 3 dans la position représentée à la figure 1, il est clair que, lorsque l'utilisateur aura positionné cet embout 3 dans le chemin de guidage 9 (figure 5), le positionnement de la portée conique 8 elle-même portée par l'embout 3 sera d'ores et déjà déterminé. Ainsi, pour assurer par la suite l'application à serrage desdites platines du dispositif de raccordement et donc l'étanchéité dudit raccord, il suffit de commander la rotation de l'embout 3 par l'intermédiaire de la poignée 4 dans le sens de l'une des flèches représentées à la figure 5. Au cours de cette rotation, la portée conique de serrage 8 prend appui à l'intérieur du ou des chemins de guidage 9 et, en raison de son profil, évoluant par exemple suivant une ellipse, cet appui provoque par réaction l'application à serrage des platines 5, 7 du dispositif. Le geste de positionnement et de serrage des deux éléments du raccordement est donc extrêmement simple. Une fois cette opération de serrage réalisée, il peut être prévu, par exemple sur la poignée 4, un organe de verrouillage qui verrouille par exemple la poignée au chemin de guidage. Ceci permet d'empêcher un desserrage intempestif du dispositif de raccordement.

Lorsque les chemins de guidage affectent une forme conforme à celle représentée à la figure 2, par exemple sous forme de deux glissières 9 parallèles portées par l'embouchure du conduit 1 de l'unité collectrice et/ou de distribution, on comprend aisément que l'application à serrage desdites platines 5 et 7 l'une contre l'autre peut être réalisée soit par rotation de l'embout 3 en direction du premier chemin de guidage, soit par rotation de l'embout 3 en direction du second chemin de guidage. On obtient ainsi un dispositif de raccordement dont le sens de fonctionnement pour assurer une application à serrage desdites platines du dispositif de raccordement et par suite l'étanchéité du raccord est indifférent.

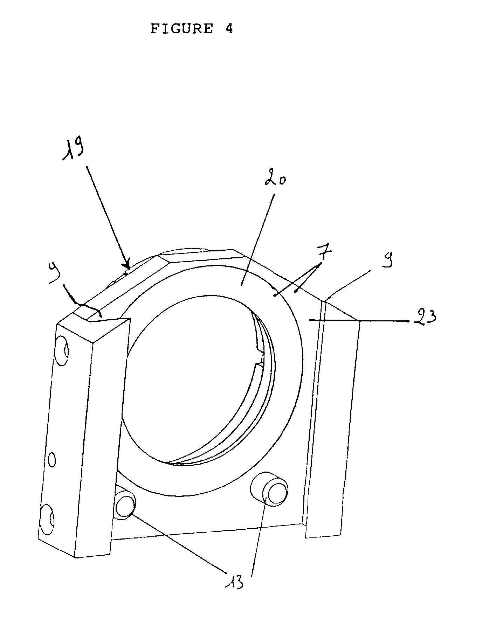

Dans le cas de la figure 1, le positionnement de l'embout 3 et plus particulièrement de sa portée 8 conique de serrage à l'intérieur du chemin de guidage 9 permet automatiquement la mise en alignement de l'embouchure du conduit 1 de l'unité collectrice et/ou de distribution avec le conduit de transfert 2. Par contre, dans le mode de réalisation représenté à la figure 4, du fait de la configuration des chemins de guidage stationnaires 9, il est prévu sur le trajet du ou des chemins de guidage stationnaires 9 au moins une butée 13 de positionnement assurant la mise en alignement de l'embouchure du conduit 1 de l'unité collectrice et/ou de distribution avec le conduit de transfert 2.

Ces butées de positionnement peuvent affecter encore une autre forme. Tel est le cas de l'exemple représenté à la figure 5. Dans l'exemple de la figure 5, il est prévu un raccord guillotine 14 disposé entre les chemins de guidage 9 du conduit 1 de l'unité collectrice et/ou de distribution, ce raccord 14 étant chargé par ressort 15 de manière à ce que, en l'absence d'embout 3 de raccordement, il se positionne en alignement avec l'embouchure du conduit 1 de l'unité collectrice et/ou de distribution pour permettre soit un raccordement avec un conduit, tel qu'un conduit de lavage, soit une obturation de ladite embouchure du conduit 1 de l'unité collectrice et/ou de distribution. Dans l'exemple représenté à la figure 5, le premier cas a été choisi, à savoir le raccordement de l'embouchure du conduit 1 de l'unité collectrice et/ou de distribution avec un conduit tel qu'un conduit de lavage. Dans ce cas, ce raccord guillotine constitue en lui-même une butée de positionnement de l'embout 3. En effet, lors de l'introduction de l'embout 3 dans les chemins de guidage, le raccord guillotine coulisse vers le bas dans la figure 5 jusqu'à une position extrême correspondant à une position dans laquelle il vient en butée sur des éléments de butée ménagés au voisinage de la partie inférieure desdits chemins de guidage. A l'inverse, dès qu'on enlève l'embout 3, le raccord guillotine, chargé par ressort 15, tend à coulisser à l'intérieur des chemins de guidage en se déplaçant vers le haut dans la figure 5 pour venir positionner le conduit de lavage qu'il porte en regard de l'embouchure du conduit 1 de l'unité collectrice et/ou de distribution. Le lavage de l'unité collectrice et/ou de distribution peut ainsi être assuré de manière automatique et particulièrement rapide. En effet, dans la plupart des dispositifs de raccordement existants, il est nécessaire de choisir entre le raccordement du conduit de transfert et le raccordement du conduit de lavage, le passage de l'un à l'autre nécessitant plusieurs manipulations. Tel n'est pas le cas ici où le positionnement du conduit de lavage se fait de manière automatique dès que l'embout 3 de raccordement est enlevé. L'obturation de l'embouchure de ce conduit 1 de l'unité collectrice et/ou de distribution peut être obtenue de manière analogue.

Il est à noter que, lorsque l'embouchure du conduit 1 relié à une unité collectrice et/ou de distribution de fluide est disposée en partie basse de ladite unité collectrice et/ou de distribution comme c'est souvent le cas sur les cuves stationnaires de stockage de fluide, une introduction par le dessus de l'embout 3 à l'intérieur du chemin de guidage sera préférée conformément à la figure 5. Dans d'autres cas, au contraire, il sera plus aisé de procéder à une introduction frontale dudit embout 3 entre les chemins de guidage pour assurer par la suite, par rotation de l'embout 3, l'application à serrage desdites platines l'une contre l'autre. Dans ce cas, la platine 5 de l'embout 3 comporte deux méplats 12 diamétralement opposés pour autoriser l'introduction frontale de ladite platine 5 entre les chemins de guidage 9 du conduit 1 de l'unité collectrice et/ou de distribution, comme cela est représenté à la figure 3.

La platine 7 d'application ménagée à l'embouchure du conduit 1 de l'unité collectrice et/ou de distribution peut affecter un grand nombre de formes. Dans l'exemple représenté à la figure 1, cette platine 7 est formée d'une seule pièce avec ledit conduit 1. Dans les figures 2 et 4, au contraire, cette platine 7 est constituée de plusieurs éléments. En d'autres termes, la platine 7 est formée d'une pièce rapportée 20 taraudée pour la fixation sur l'embouchure du conduit 1, cette pièce rapportée 20 supportant un chemin de guidage 9 amovible maintenu en position sur la pièce rapportée 20 par coopération entre filetage de ladite pièce rapportée 20 et taraudage d'un écrou 19. Ainsi, comme le montre la figure 2, l'embouchure proprement dite du conduit 1 est filetée et porte une pièce rapportée 20 filetée et taraudée comportant un perçage traversant pour le passage de l'embouchure du conduit 1. Cette pièce rapportée 20, représentée à la figure 4, est vissée sur ladite embouchure du conduit 1 et porte le chemin de guidage ménagé dans une pièce 23 formée d'un ou plusieurs éléments. Cette pièce 23, taraudée une fois vissée sur la pièce rapportée 20, est maintenue et immobilisée en position sur cette dernière au moyen d'un écrou 19 qui coopère avec le filetage de ladite pièce rapportée 20. La pièce 23 est vissée sur la pièce 20 de telle sorte que leurs faces frontales sont parfaitement en alignement pour délimiter une face de préférence sensiblement plane constituant la surface de la platine 7. En conséquence, la platine 7 est délimitée par de pièces 20, 23 et l'embouchure du conduit 1. La surface de cette platine 7 peut être plus ou moins plane. Elle sera toujours conformée pour que l'application à serrage de la platine 5 contre elle assure une étanchéité de l'ensemble. On assure parallèlement un positionnement précis du chemin de guidage au niveau de l'embouchure du conduit 1 de manière à garantir le fonctionnement des moyens de serrage. Cette construction est intéressante car elle permet de ne pas rallonger le circuit du fluide d'une installation équipée d'un conduit fileté.

De même, le ou les chemins de guidage 9, en fonction de leur configuration, peuvent être montés amovibles sur ledit conduit 1. Tel est le cas de l'exemple représenté à la figure 4.

Dans l'exemple représenté à la figure 2, l'embouchure du conduit 1 de l'unité collectrice et/ou de distribution de fluide comporte une rainure circonférentielle interne 21 ménagée en regard de la saillie 23 disposée sur la face d'application de la collerette 11 telle que représentée à la figure 3 et déjà décrite ci-dessus. Cette rainure 21 sert de logement à un joint torique. Ainsi, lors du positionnement de l'embout 3 et en particulier de la portée 8 de serrage dudit embout à l'intérieur du chemin de guidage 9, la saillie 23 tend à venir en application contre ledit joint. Au cours de la rotation de l'embout 3 commandée par le déplacement de la poignée 4, le manchon stationnaire 10 équipé de cette saillie 23 reste fixe tandis que l'embout 3 tourne. De ce fait, le joint torique, disposé légèrement en retrait de la face de la platine 7, ne subit aucun endommagement que ce soit par frottement, par arrachement ou par torsion. En conséquence, cela permet de préserver l'étanchéité dudit dispositif en excluant toute usure du joint. Il est à noter que ce joint est facultatif. En effet, l'étanchéité pourrait être obtenue par contact métal-métal si les platines 5 et 7 comportaient des faces dressées. Dans ce cas, la seule application par serrage desdites platines engendrerait l'étanchéité dudit dispositif de raccordement.

Enfin dans le cas d'une application, par exemple au lait, il peut être prévu un filtre 22 destiné à venir se loger à l'intérieur dudit embout 3. Ce filtre permet, au moment de la vidange des cuves à lait stationnaires disposées chez l'éleveur, d'empêcher le passage de corps étrangers dans le conduit de transfert 2 et par suite de détériorer l'installation de pompage. Ce filtre amovible affecte la forme d'un tronc de cône fermé à l'une de ses extrémités et comportant à son extrémité opposée à son extrémité fermée une collerette.

## Revendications

1. Dispositif de raccordement entre un conduit (1) relié à une unité collectrice et/ou de distribution de fluide et un conduit de transfert (2), dans lequel
le conduit de transfert (2) est équipé, à son extrémité de raccordement avec le conduit (1) de l'unité collectrice et/ou de distribution, d'un embout (3) comportant d'une part au moins une poignée (4) de port, de préférence radiale audit embout (3), et solidaire de ce dernier et, d'autre part, une platine (5) présentant une face (6), de préférence dressée, destinée à venir s'appliquer à pression contre une platine (7) de l'embouchure du conduit (1) de l'unité collectrice et/ou de distribution, l'embout (3) étant monté libre à rotation par rapport au conduit de transfert (2) pour permettre, dans la position de port, la mise en regard des deux platines (5, 7) de l'ensemble conduit (1) d'unité collectrice/embout (3), puis, par rotation de l'embout (3) par l'intermédiaire de la poignée (4), l'application à serrage desdites platines (5, 7) du dispositif de raccordement.

2. Dispositif de raccordement selon la revendication 1,
caractérisé en ce que l'embout (3) et le conduit (1) de l'unité collectrice et/ou de distribution comportent respectivement, l'un sur sa platine d'application (5) ou (7) à l'opposé de la face d'application de ladite platine, un profil de came évolutif formé par une portée de serrage, l'autre au moins un chemin de guidage (9) porté par son embouchure, la portée de serrage étant destinée à être introduite dans le chemin de guidage de manière telle que, lors de la rotation de l'embout (3) à l'aide de la poignée (4), la portée de serrage prenne appui à l'intérieur du ou des chemins de guidage et, par réaction, provoque l'application à serrage des platines (5, 7) du dispositif.

3. Dispositif de raccordement selon la revendication 2,
caractérisé en ce que la platine (5) d'application de l'embout (3) comporte, à l'opposé de sa face (6), de préférence dressée, un profil de came évolutif formé par une portée (8) conique de serrage évoluant de préférence suivant une ellipse destinée à être introduite dans au moins un chemin de guidage (9), tel que deux glissières parallèles portées par l'embouchure du conduit (1) de l'unité collectrice et/ou de distribution.

4. Dispositif de raccordement selon l'une des revendications 1 à 3,
caractérisé en ce que l'embout (3) est traversé par un manchon (10) comportant à une extrémité une collerette (11) destinée à prendre appui sur la platine (7) de l'embouchure du conduit (1) de l'unité collectrice et/ou de distribution, l'autre extrémité étant solidaire du conduit de transfert (2), l'embout (3) portant la poignée (4) pouvant être déplacé angulairement par rapport au manchon (10) stationnaire.

5. Dispositif de raccordement selon l'une des revendications 1 à 3,
caractérisé en ce que l'embout (3) est réalisé monobloc et est raccordé au conduit de transfert (2) par l'intermédiaire d'un raccord tournant disposé en amont de la poignée de port (4).

6. Dispositif de raccordement selon l'une des revendications 1 à 5,
caractérisé en ce que la platine (5) de l'embout (3) comporte deux méplats (12) diamétralement opposés pour autoriser une introduction frontale de la platine (5) entre les chemins de guidage (9) du conduit (1) de l'unité collectrice et/ou de distribution.

7. Dispositif de raccordement selon l'une des revendications 1 à 6,
caractérisé en ce qu'il est prévu, sur le trajet du ou des chemins de guidage (9) stationnaires, au moins une butée (13) de positionnement assurant la mise en alignement de l'embouchure du conduit (1) de l'unité collectrice et/ou de distribution avec le conduit de transfert (2).

8. Dispositif de raccordement selon l'une des revendications 1 à 7,
caractérisé en ce qu'il est prévu un raccord guillotine (14) disposé entre les chemins de guidage (9) du conduit (1) de l'unité collectrice et/ou de distribution, ce raccord (14) étant chargé par ressort (15) de manière à ce que, en l'absence d'embout (3) de raccordement, il se positionne en alignement avec l'embouchure du conduit de l'unité collectrice et/ou de distribution pour permettre soit un raccordement avec un conduit tel qu'un conduit de lavage, soit une obturation de ladite embouchure.

9. Dispositif de raccordement selon l'une des revendications 1 à 8,
caractérisé en ce que les chemins de guidage (9) du conduit (1) de l'unité collectrice et/ou de distribution sont montés amovibles sur ledit conduit (1).

10. Dispositif de raccordement selon l'une des revendications 1 à 9,
caractérisé en ce que la platine (7) est formée d'une pièce rapportée (20) taraudée pour la fixation sur l'embouchure du conduit (1), cette pièce rapportée (20) supportant un chemin de guidage (9) amovible maintenu en position sur la pièce par coopération entre filetage de ladite pièce rapportée (20) et taraudage d'un écrou (19).

## Patentansprüche

1. Verbindungsvorrichtung zwischen einer Leitung (1), die mit einer Sammel- und/oder Verteilereinheit für ein Fluid verbunden ist, und einer Umfülleitung (2), wobei die Umfülleitung (2) an ihrem Verbindungsende zur Leitung (1) der Sammel- und/oder Verteilereinheit mit einem Ansatzstück (3) versehen ist, das einerseits wenigstens einen, vorzugsweise zu dem besagten Ansatzstück (3) radialen und fest mit diesem verbundenen Traggriff (4) und andererseits eine Platte (5) umfaßt, die eine vorzugsweise gerichtete Fläche (6) aufweist, die dazu bestimmt ist, an eine Platte (7) der Mündung der Leitung (1) der Sammel- und/oder Verteilereinheit angedrückt zu werden, wobei das Ansatzstück (3) drehbeweglich im Verhältnis zur Umfülleitung (2) gelagert ist, um in der Tragposition die Gegenüberlagerung der beiden Platten (5, 7) der Einheit Leitung (1) der Sammeleinheit/Ansatzstück (3) und anschließend durch Drehung des Ansatzstücks (3) über den Griff (4) das Anklemmen der besagten Platten (5, 7) der Verbindungsvorrichtung zu ermöglichen.

2. Verbindungsvorrichtung nach Anspruch 1,
**dadurch gekennzeichnet**, daß das Ansatzstück (3) und die Leitung (1) der Sammel- und/ oder Verteilereinheit, zum einen auf ihrer Andrückplatte (5) oder (7) gegenüber der Andrückfläche der besagten Platte, ein durch eine Klemmsitzfläche gebildetes veränderliches Nockenprofil und zum anderen wenigstens eine an ihrer Mündung angebrachte Führungsbahn (9) umfassen, wobei die Klemmsitzfläche dazu bestimmt ist, so in die Führungsbahn eingesetzt zu werden, daß bei der Drehung des Ansatzstücks (3) anhand des Griffs (4) die Klemmsitzfläche im Innern der Führungsbahn bzw. der Führungsbahnen zur Anlage kommt und durch Gegenwirkung das Anklemmen der Platten (5, 7) der Vorrichtung bewirkt.

3. Verbindungsvorrichtung nach Anspruch 2,
**dadurch gekennzeichnet**, daß die Andrückplatte (5) des Ansatzstücks (3) gegenüber ihrer vorzugsweise gerichteten Fläche (6) ein veränderliches Nockenprofil aufweist, das durch eine konische Klemmsitzfläche (8) gebildet wird, die vorzugsweise entsprechend einer Ellipse verläuft und für das Einsetzen in wenigstens eine Führungsbahn (9) bestimmt ist, etwa in zwei parallele Gleitführungen, die an der Mündung der Leitung (1) der Sammel- und/oder Verteilereinheit angebracht sind.

4. Verbindungsvorrichtung nach einem der Ansprüche 1 bis 3,
**dadurch gekennzeichnet**, daß durch das Ansatzstück (3) eine Muffe (10) hindurchgeht, die an einem Ende einen Bund (11) umfaßt, der dazu bestimmt ist, auf der Platte (7) der Mündung der Leitung (1) der Sammel- und/oder Verteilereinheit zur Anlage zu kommen, während das andere Ende fest mit der Umfülleitung (2) verbunden ist, wobei das Ansatzstück (3), das den Griff (4) trägt, im Verhältnis zu der ortsfesten Muffe (10) winklig verschoben werden kann.

5. Verbindungsvorrichtung nach einem der Ansprüche 1 bis 3,
**dadurch gekennzeichnet**, daß das Ansatzstück (3) einteilig ausgeführt und an die Umfülleitung (2) über einen vor dem Traggriff (4) angeordneten Drehanschluß angeschlossen ist.

6. Verbindungsvorrichtung nach einem der Ansprüche 1 bis 5,
**dadurch gekennzeichnet**, daß die Platte (5) des Ansatzstücks (3) zwei diametral gegenüberliegende Abflachungen (12) umfaßt, um ein stirnseitiges Einsetzen der Platte (5) zwischen den Führungsbahnen (9) der Leitung (1) der Sammel- und/oder Verteilereinheit zu ermöglichen.

7. Verbindungsvorrichtung nach einem der Ansprüche 1 bis 6,
**dadurch gekennzeichnet**, daß auf dem Verlauf der ortsfesten Führungsbahn(en) (9) wenigstens ein Positionieranschlag (13) vorgesehen ist, der die Ausrichtung der Mündung der Leitung (1) der Sammel- und/oder Verteilereinheit mit der Umfülleitung (2) ermöglicht.

8. Verbindungsvorrichtung nach einem der Ansprüche 1 bis 7,
**dadurch gekennzeichnet**, daß ein Schieberanschluß (14) vorgesehen ist, der zwischen den Führungsbahnen (9) der Leitung (1) der Sammel- und/oder Verteilereinheit angeordnet ist, wobei dieser Anschluß (14) durch eine Feder beaufschlagt ist, so daß er sich in Abwesenheit des Anschlußansatzstücks (3) in Ausrichtung auf die Mündung der Leitung der Sammel- und/oder Verteilereinheit positioniert, um entweder eine Verbindung mit einer Leitung, etwa einer Waschleitung, oder einen Verschluß der besagten Mündung zu ermöglichen.

9. Verbindungsvorrichtung nach einem der Ansprüche 1 bis 8,
**dadurch gekennzeichnet**, daß die Führungsbahnen (9) der Leitung (1) der Sammel- und/ oder Verteilereinheit abnehmbar an der besagten Leitung (1) angebracht sind.

10. Verbindungsvorrichtung nach einem der Ansprüche 1 bis 9,
**dadurch gekennzeichnet**, daß die Platte (7) aus einem angefügten Gewindeteil (20) zur Befestigung an der Mündung der Leitung (1) besteht, wobei dieses angefügte Teil (20) eine abnehmbare Führungsbahn (9) trägt, die an dem Teil durch Zusammenwirken zwischen dem Außengewinde des besagten angefügten Teils (20) und dem Innengewinde einer Mutter (9) in Position gehalten wird.

## Claims

1. Connecting means between a pipe (1) connected to a fluid collecting and/or distribution unit and a transfer pipe (2), in which the transfer pipe (2) is equipped, at that end thereof connected to the pipe (1) of the collecting and/or distribution unit, with a joining piece (3) comprising, on the one hand, at least one carrying handle (4), preferably radial to the said joining piece (3) and integral with the latter, and, on the other hand, a plate (5) having a preferably dressed surface (6) intended to bear under pressure against an orifice plate (7) of the pipe (1) of the collecting and/or distribution unit, the joining piece (3) being fitted such that it can rotate freely with respect to the transfer pipe (2) to enable the two plates (5, 7) of the collecting unit pipe (1)/joining piece (3) assembly to face one another in the carrying position and then, by turning the joining piece (3) by means of the handle (4), allow clamping application of the said plates (5, 7) of the connecting means.

2. Connecting means according to Claim 1,
characterised in that the joining piece (3) and the pipe (1) of the collecting and/or distribution unit comprise, respectively, the one on its application plate (5) or (7) opposite the application surface of the said plate, an evolutive cam section formed by a bearing surface for clamping, the other at least one guide track (9) mounted on its orifice, the bearing surface for clamping being intended to be introduced into the guide track in such a way that, during turning of the joining piece (3) with the aid of the handle (4), the bearing surface for clamping comes to bear on the inside of the guide track or tracks and, by reaction, gives rise to clamping application of the plates (5, 7) of the means.

3. Connecting means according to Claim 2,
characterised in that the application plate (5) of the joining piece (3) comprises, opposite its, preferably dressed, surface (6), an evolutive cam section formed by a conical bearing surface for clamping (8), preferably progressing in accordance with an ellipse, intended to be introduced into at least one guide track (9), such as two parallel slides mounted on the orifice of the pipe (1) of the collecting and/or distribution unit.

4. Connecting means according to one of Claims 1 to 3,
characterised in that a sleeve tube (10) passes through the joining piece (3), said sleeve tube (10) having at one end a collar (11) intended to bear on the plate (7) of the orifice of the pipe (1) of the collecting and/or distribution unit, the other end being integral with the transfer pipe (2), it being possible for the joining piece (3) bearing the handle (4) to be moved angularly with respect to the stationary sleeve tube (10).

5. Connecting means according to one of Claims 1 to 3,
characterised in that the joining piece (3) is made in one piece and is connected to the transfer pipe (2) via a rotary connector arranged upstream of the carrying handle (4).

6. Connecting means according to one of Claims 1 to 5,
characterised in that the plate (5) of the joining piece (3) has two diametrically opposed flat surfaces (12) to allow frontal introduction of the plate (5) between the guide tracks (9) of the pipe (1) of the collecting and/or distribution unit.

7. Connecting means according to one of Claims 1 to 6,
characterised in that at least one positioning stop (13) is provided along the path of the stationary guide track or tracks (9), ensuring alignment of the orifice of the pipe (1) of the collecting and/or distribution unit with the transfer pipe (2).

8. Connecting means according to one of Claims 1 to 7,
characterised in that a guillotine connector (14) is provided arranged between the guide tracks (9) of the pipe (1) of the collecting and/or distribution unit, this connector (14) being loaded by spring (15) such that, in the absence of the connecting joining piece (3), it positions itself in alignment with the orifice of the pipe of the collecting and/or distribution unit to allow either connection to a pipe, such as a washing pipe, or closure of the said orifice.

9. Connecting means according to one of Claims 1 to 8,
characterised in that the guide tracks (9) of the pipe (1) of the collecting and/or distribution unit are mounted on the said pipe (1) such that they are immovable.

10. Connecting means according to one of Claims 1 to 9,
characterised in that the plate (7) is formed by a separate threaded part (20) for fixing on the orifice of the pipe (1), this separate part (20) carrying an immovable guide track (9) held in position on the part by interaction between the screw thread on the said separate part (20) and the screw thread of a nut (19).
